# EUROPÄISCHE PATENTSCHRIFT

(11) **EP 1 145 844 B1**
(45) Veröffentlichungstag und Bekanntmachung des Hinweises auf die Patenterteilung: **31.05.2006**
(21) Anmeldenummer: 01108220.3
(22) Anmeldetag: 31.03.2001
(51) Int. Cl.: B32B 27/18, F16L 11/08, B32B 27/32

(54) **Extrudiertes, spritzgegossenes oder blasgeformtes Rohr, Fitting oder Formstück aus Kunststoff**
Pipe, fitting or piece from extruded, injection-moulded or blow-moulded plastic
Tuyau, raccord ou pièce en plastique, extrudé, injecté ou soufflé

(30) Priorität: 13.04.2000 DE 10018324
(43) Veröffentlichungstag der Anmeldung: 17.10.2001
(73) Patentinhaber: Rosenberg, Gerhard, 57439 Attendorn-Ennest (DE)
(72) Erfinder: Rosenberg, Gerhard, 57439 Attendorn-Ennest (DE)
(74) Vertreter: Stoffregen, Hans-Herbert

(56) Entgegenhaltungen:
- EP-A- 0 470 605
- DATABASE WPI Section Ch, Week 198613 Derwent Publications Ltd., London, GB; Class A88, AN 1986-085463 XP002199613 & JP 61 032743 A (SHOWA DENKO KK), 15. Februar 1986 (1986-02-15)
- DATABASE WPI Section Ch, Week 197506 Derwent Publications Ltd., London, GB; Class A32, AN 1975-09680W XP002199614 & JP 49 050060 A (TOA NENRYO KOGYO KK), 15. Mai 1974 (1974-05-15)
- DATABASE WPI Section Ch, Week 199011 Derwent Publications Ltd., London, GB; Class A18, AN 1990-078817 XP002199615 & JP 02 031095 A (YOKOHAMA RUBBER CO LTD), 1. Februar 1990 (1990-02-01)
- DATABASE WPI Section Ch, Week 199327 Derwent Publications Ltd., London, GB; Class A18, AN 1993-216248 XP002199616 & JP 05 138822 A (TOKAI RUBBER IND LTD), 8. Juni 1993 (1993-06-08)

## Beschreibung

Die Erfindung betrifft ein extrudiertes, spritzgegossenes oder blasgeformtes Rohr, Fitting oder Formstück aus Kunststoff zum Erstellen von Rohrleitungen für flüssige, pastöse und gasförmige Medien, mit einem aus mindestens drei Schichten aufgebauten Rohrkörper mit einer Innenschicht und einer Außenschicht aus einem Grundwerkstoff und einer Mittelschicht aus einem Grundwerkstoff sowie mindestens einem Zusatzwerkstoff. Ferner bezieht sich die Erfindung auf ein Verfahren zur Herstellung des Ausgangsverbundwerkstoffes der Mittelschicht des Rohrs, Fittings oder Formstücks.

Die Einsatzgebiete für Rohre aus Metall, insbesondere Kupfer, verzinktem Stahl, Edelstahl und zu einem geringen Teil aus Blei sind durch bestimmte Medienparameter wie pH-Wert, Strömungsgeschwindigkeit und Betriebstemperatur beschränkt. Das Korrosionsverhalten von Metallrohren und die Schwermetallabgabe bei Blei- und Kupferrohren schränken die Einsatzmöglichkeiten von Metallrohren für Trinkwasserleitungen und in der Lebensmittelindustrie benötigte Leitungen weiter ein. Hinzu kommt, dass die Gewinnung von Metallen, die Erzförderung, der Erztransport und die Verhüttung von Erzen sowie die Herstellung von Metallrohren aufgrund des erforderlichen Energieaufwandes in vielen Fällen nicht mehr wirtschaftlich und im Hinblick auf eine Schädigung der Umwelt nicht mehr vertretbar ist.

Aus den vorgenannten Gründen gewinnen Kunststoffrohre zum Erstellen von Rohrleitungen für unterschiedliche Einsatzgebiete wie die Trinkwasserversorgung, die Heizungstechnik, die Lebensmittelindustrie, den Apparatebau sowie die chemische Industrie zunehmend an Bedeutung.

Die Vorteile von Kunststoffrohren gegenüber Metallrohren liegen in ihrer größeren Beständigkeit gegenüber aggressiven Medien und Inkrustationen, der besseren Korrosionsbeständigkeit, einer verbesserten Isolierwirkung, der hygienischen Eignung, dem leichteren Gewicht, der einfacheren Verbindungstechnik und Montage sowie einer günstigeren Umweltbilanz.

Die für die Herstellung von Rohren verwendeten Kunststoffe wie Polyvinylchlorid, unvernetztes und vernetztes Polyethylen, Polybuten sowie Polypropylen, die durch innere oder äußere Schichten aus Metall, insbesondere Aluminium, verstärkt werden können, unterscheiden sich durch das verwendete Polymer und die daraus resultierenden unterschiedlichen mechanischen Eigenschaften sowie die Verbindungstechnik. Zur Verbindung von Rohren und Formteilen aus Kunststoff gelangen Klemm-, Schraub-, Preß-, Quetsch- und Schiebehülsensysteme, Klebesysteme sowie das Heizelementmuffenschweißen zur Anwendung.

Dauernder Kontakt mit oxidierenden und reduzierenden Medien in Rohrleitungen aus Kunststoff verschlechtern die chemischen und mechanischen Eigenschaften des als Rohrwerkstoff eingesetzten Kunststoffs. Die Makromoleküle des Rohrwerkstoffs besitzen eine bestimmte Länge und eine bestimmte Anzahl an Kettenverschlaufungen untereinander. Die Kettenlänge und Art der Verschlaufungen bestimmen in erster Linie das Eigenschaftsbild des Rohrwerkstoffs. Zwischen den kristallinen Bestandteilen der als Rohrwerkstoffe bevorzugt eingesetzten Polymerwerkstoffe befinden sich nichtkristalline, amorphe Bereiche, die für eine Verschiebbarkeit der kristallinen Anteile im Polymeren sorgen und eine gewisse Elastizität und Zähigkeit des Rohrwerkstoffs bewirken.

Gegen eine Schädigung des für Rohre verwendeten Polymerwerkstoffs können in dessen amorphe Bereiche Additive wie Metalldesaktivatoren, Chlorakzeptoren, Säureakzeptoren, Radikalfänger, UV-Stabilisatoren, Verarbeitungs- sowie Langzeitthermostabilisatoren eingearbeitet werden. Diese Additive müssen extraktionsstabil aber migrationsfähig in die Polymermatrix eingebunden werden.

Die Additive sind in den amorphen Bereichen des Polymerwerkstoffs beweglich. Dieser Effekt ist erwünscht, damit das benötigte Additiv zu der mediumberührenden Stelle wandern kann, an der es eine Schutzwirkung gegen die aggressiven Medien entwickelt und die Polymerketten vor einer Schädigung schützt.

Ein entscheidender Nachteil bei Rohren aus einem additivierten Polymerwerkstoff besteht darin, daß ein erheblicher Anteil der Additive über die amorphen Bereiche aus der Innenschicht über die Mittelschicht in die Außenschicht der Rohre migriert, in der die Additive nicht benötigt werden. Wenn die Wirksamkeit der Additive durch ihren Schutzmechanismus verbraucht oder umgewandelt ist, beginnt in der Innenschicht der Rohre, die mit dem durch die Rohre fließendem Medium in Kontakt steht, eine Molekülschädigung, der sogenannte Kettenabbau. Der Rohrwerkstoff versprödet, wird hart und bruchanfällig. Die Wandstärke des Rohres verringert sich infolge von Abrasion und Kettenabbau. Schließlich führt der Rohrinnendruck zum Bruch des Rohres. Diese Abbauerscheinungen des Rohrwerkstoffs sind stark medium- und temperaturabhängig. Mit steigender Mediumtemperatur nimmt die Schädigungsgeschwindigkeit überproportional zu.

Ein Kunststoffrohr der eingangs genannten Art ist aus der EP 0 470 605 A1, bekannt. Der Grundwerkstoff des Rohrs besteht aus Polyamid, wobei die Mittelschicht mit Glasfasern verstärkt ist. Ein entsprechendes Rohr soll insbesondere eine ausreichend geringe Permeation gegen Kraftstoffe zeigen.

Der Literaturstelle Database WPI Section Ch, Week 198613 Derwent Publications Ltd., London, GB; Class A88, AN 1986-085463 XP002199613 & JP 61 032743 A (SHOWA DENKO KK), 15. Februar 1986 (1986-01-15) ist ein Dreischichtrohr zu entnehmen, das aus Polyethylen, Ethylenpropylencopohmer und einer Mischung dieser besteht. Die Mittelschicht weist Glasfasern für eine hinreichend Steifigkeit und Wetterbeständigkeit auf. Auch ist eine gute Verschweißbarkeit geweben.

Um ein Zweischichtrohr herzustellen, wird nach der Literaturstelle Database WPI Section Ch, Week 197506 Derwent Publications Ltd., London, GB; Class A32, AN 1975-09680W XP002199614 & JP 49 050060 A (TOA NENRYO KOGYO KK), 15. Mai 1974 (1974-05-15) ein Extrusionsverfahren vorgeschlagen. Um die Schichten hinreichend stabil zu gestalten, können diese Glasfasern enthalten.

In der Literaturstelle J. Comyn, Polymer Permeability, Elsevier Applied Science Publishers Ltd., London, New York, 1988, S. 126 - 145, wird das Phänomen der Permeabilität von Sauerstoff in Polymerstoffen abgehandelt, der zu einer unerwünschten Oxidation der Polymere führt. Um eine Permeation zu verhindern bzw. einzudämmen, werden in dem Polymerwerkstoff Additive eingebaut.

Die CA-A-1273768 bezieht sich auf ein Verfahren zur Herstellung von faserverstärkten Kunststoffrohren und eine Vorrichtung zum Herstellen dieser. Hierzu werden ein erstes, ein zweites und ein drittes Kunststoffmaterial coextrudiert.

Ein aus Kunststoff bestehendes Mehrschichtdruckrohr ist aus der WO-A-9741376 bekannt. Das Rohr wird durch Extrusion hergestellt, wobei als Material Polypropylen benutzt wird, dem Verstärkungsfasern aus Glas beigegeben sind.

Ein mehrschichtiges Kunststoffrohr wird in der EP-B-0358178 beschrieben, das eine Zwischenschicht aus Polypropylen und Glasfaserteilen umfasst.

Ein aus Polymerwerkstoff bestehender Behälter weist nach der WO-A-9801346 Bestandteile auf, um eine Permeabilität gegenüber Gasen zu reduzieren.

Die Literaturstelle Nielsen, Models for the Permeability of filled Polymer Systems, J. Macromol.Sci.-(Chem.), 1997, S. 929 - 942, setzt sich mit der Problematik der Permeabilitätsminderung in Kunststoffen auseinander.

In der DE.Z.: KWD-Rundschreiben Nur. 996 vom 11. Juni 1999 wird ein Mehrschichtrohr aus Polypropylen der Firma aquatherm GmbH, D-57439 Attendorn, beschrieben, das auch Gegenstand des Prospekts DE.Z.: Fusiotherm, Rohrleitungssystem Technik & Produkte, Stand 4/99, bzw. des Prospekts DE.Z.: Fusiotherm, Pipe System, Technique & Products", Edition 10/99, ist.

Der Erfindung liegt die Aufgabe zu Grunde, Rohre, Fittings und Formstücke aus Kunststoff zum Erstellen von Rohrleitungen für flüssige, pastöse und gasförmige Medien, mit einer hohen mechanischen, chemischen und thermischen Beständigkeit zu entwickeln,

Diese Aufgabe ist erfindungsgemäß dadurch gelöst, daß die Innenschicht, die Mittelschicht und die Außenschicht des Rohres, Fittings oder Formstücks aus einem Polymerwerkstoff mit einem Polypropylen-Random-Copolymerisat als Grundwerkstoff. bestehen, dass die Mittelschicht
a) Polypropylen-Random-Copolymerisat mit einem Gewichtsanteil von 50 bis 90 Gewichtsprozent, das einen Ethengehalt von 2 bis 6 Gewichtsprozent und einen MFR-Wert von 0,3 bis 10 Gramm/10 Minuten bei einer Prüffemperautr von 190 °C und 5 Kilogramm Belastungsgewicht aufweist,
b) Glasfasern, Glaskugeln oder Glasmehl oder Mischungen dieser Werkstoffe mit einem Gewichtsanteil von 10 bis 50,
c) ein Kupplungsadditiv zum Verbund der Polypropylen-Random-Copolymerisat-Matrix mit den Glasfasern und/oder den Glaskugeln und/oder dem Glasmehl enthält,
daß in die amorphen Bereiche des teilkristallinen Polymerwerkstoffs der mit dem zu fördemden Medium in Kontakt stehenden Innenschicht und/oder der Mittelschicht Additive gegen aggressive Medien, insbesondere oxidierende und reduzierende Medien, eingebaut sind und dass in die amorphen Bereiche des Polymerwerkstoffs der Mittelschicht Füllstoffe und Additive als Barrierewerkstoff zur Minderung einer Migration der Additive aus der Innenschicht in die Außenschicht des Rohres, Fittings oder Formstücks eingearbeitet sind.

Durch die Sperrwirkung der migrationsmindernden Mittelschicht der Rohre, Fittings und Formstücke verbleiben die wirksamen Additivkomponenten in der Innenschicht, welche mit dem durch eine Rohrleitung strömenden Medium in Kontakt kommt. Das Auswandern und Migrieren der Additive in Schichten bzw. Bereiche der Rohre, Fittings und Formstücke, die nicht mit dem durch eine Rohrleitung strömenden Medium in Kontakt kommen, wird verhindert. Die Diffusion von Gasen und Flüssigkeiten von außen durch die Rohrwand in das in einer Rohrleitung strömende Medium wird ebenfalls verringert. Aufgrund der Barrierewirkung der Mittelschicht wird die chemische und thermische Beständigkeit der Innenschicht erhöht. Durch die dauerhafte und anhaltende Konzentrierung der Additive in der mit dem strömenden Medium in Kontakt stehenden Innenschicht der Rohre, Fittings und Formstücke wird dem Angriff von kathalytischen Metallionen und dem oxidierenden Angriff von Sauerstoff, Säuren und Laugen sowie freiem Chlor und anderen halogenen auch bei höheren Betriebstemperaturen erfolgreich entgegengewirkt und die Beständigkeit gegen diese Medien erhöht. Das durch einen Schichtaufbau gekennzeichnete Kunststoffrohr zeichnet sich weiterhin durch eine hohe Biege- und Zugfestigkeit, eine einfache Handhabung und Verarbeitung, gute hygienische Eigenschaften sowie eine gute Schalldämmung gegen Strömungsgeräusche aus, die beim Durchströmen des Rohres von einem flüssigen Medium erzeugt werden.

Die Erfindung ist nachstehend anhand schematischer Zeichnungen erläutert, die folgendes darstellen:
- Fig. 1: eine perspektivische Darstellung eines Rohres zum Erstellen von Rohrleitungen und
- Fig. 2: eine vergrößerte Querschnittsdarstellung des Rohres gemäß Ausschnitt I der Fig. 1.

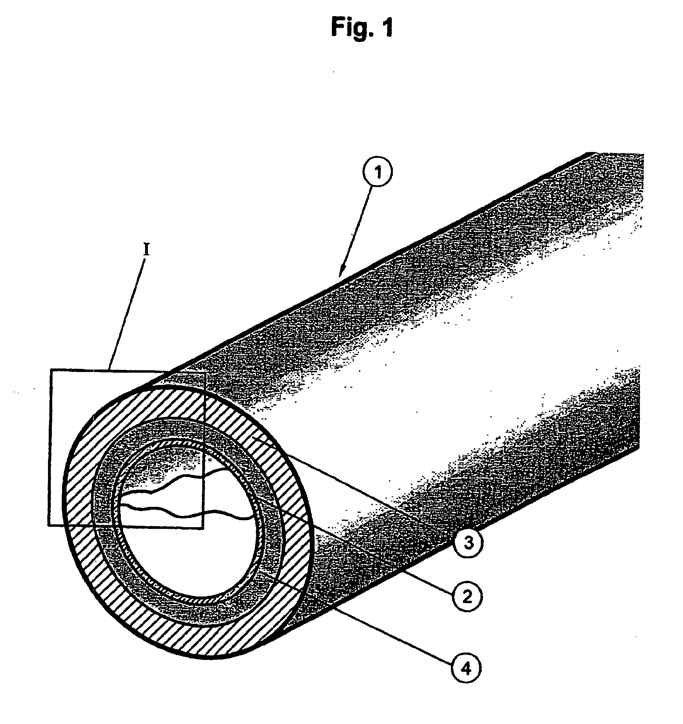

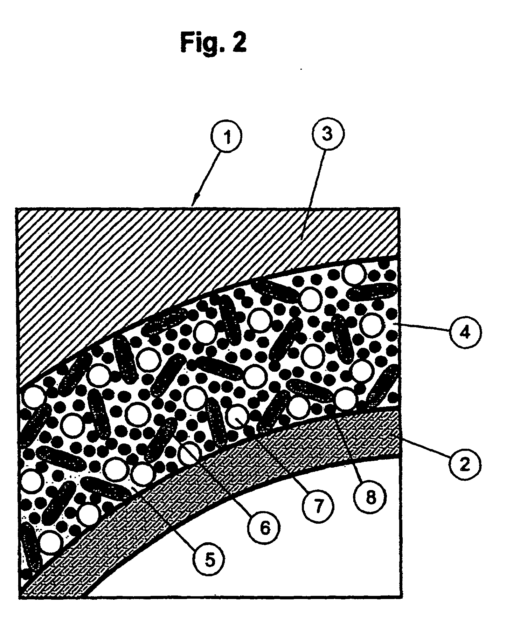

Das Kunststoffrohr nach den Fign. 1 und 2 zum Erstellen von Rohrleitungen für flüssige, pastöse und gasförmige Medien, das bevorzugt als Wasserrohr zum Einsatz kommt und das durch Extrudieren, Spritzgießen oder Blasformen herstellt werden kann, besitzt einen schichtweise aufgebauten Rohrkörper 1 mit einer Innenschicht 2 und einer Außenschicht 3 aus einem Grundwerkstoff sowie eine Mittelschicht 4 aus einem Verbundwerkstoff, der aus einem Grundwerkstoff und mindestens einem Zusatzwerkstoff besteht.

Der Grundwerkstoff der Innenschicht 2 und der Außenschicht 3 des Kunststoffrohres besteht aus einem Polypropylen-Random-Copolymerisat.

Der Verbundwerkstoff der Mittelschicht 4 des Kunststoffrohres setzt sich aus einem Polypropylen-Random-Copolymerisat 5 mit einem Gewichtsanteil von 50 bis 90, vorzugsweise 60 bis 80 Gewichtsprozent, Glasfasern 6, Glaskugeln 7 oder Glasmehl 8 oder Mischungen dieser Werkstoffe mit einem Gewichtsanteil von 10 bis 50, vorzugsweise 20 bis 40 Gewichtsprozent sowie einem Kupplungadditiv zum Verbinden der Polypropylen- Random-Copolymerisat- Matrix 5 mit den Glasfasern 6 und/oder den Glaskugeln 7 und/oder dem Glasmehl 8 zusammen.

Das Polypropylen-Random-Copolymerisat des Verbundwerkstoffes der Mittelschicht 4 hat einen Ethengehalt von 2 bis 6 Gewichtsprozent und einen MFR-Wert (Melt Flow Rate-Wert) von 0,3 bis 10 Gramm/10 Minuten bei 190° C und einer Belastung von 5 Kilogramm.

Das Kupplungsadditiv zum Verbund von Polypropylen-Random-Copolymerisat-Matrix sowie Glasfasern, Glaskugeln oder Glasmehl oder Mischungen dieser Werkstoffe der Mittelschicht 4 des Rohrkörpers 1 besteht aus einer Silanverbindung.

Das Ethen wird dem Verbundwerkstoff beigegeben, um die durch das Fasermaterial bewirkte Sprödigkeit desselben zu verringern und dem Werkstoff eine ausreichende Elastizität zu geben.

Dem Verbundwerkstoff der Mittelschicht 4 und/oder dem Grundwerkstoff der Innenschicht 2 des Kunststoffrohres sind Verarbeitungshilfsstoffe wie Gleitmittel und Additive wie Licht- und Wärmestabilisatoren beigemischt.

Zur Herstellung des Ausgangsverbundwerkstoffs der Mittelschicht 4 des Kunststoffrohres wird in einer Compoundiereinheit ein plastifiziertes bzw. zähflüssiges Polypropylen-Random-Copolymerisat mit Kurzschnittglasfasern mit einer Ausgangslänge von 0,1 - 6 Millimetern oder Endlosfasern, die beim Mischvorgang zerkleinert werden, und /oder mit Glaskugeln und/oder mit Glasmehl sowie gegebenenfalls Stabilisatoren und Additiven zu einem homogenen Verbundwerkstoff verarbeitet, wobei die Glasfasern einen tex zwischen 500 und 5000 aufweisen.

Das Kunststoffrohr kann auf einer Maschine gefertigt werden, die mit drei Extrudern zum Extrudieren der Innenschicht 2, der Mittelschicht 4 und der Außenschicht 3 ausgerüstet ist.

Zum Verschweißen des Kunststoffrohres mit Fittings bzw. Formteilen werden das zu verbindende Rohrende und die Innenwand der Bohrung des Fittings bzw. Formteils mit einem Werkzeug bis zum Fließen des Kunststoffs erhitzt, wobei das Werkzeug aus einer elektrisch beheizten Heizbuchse zum Erhitzen des Rohrendes und einem elektrisch beheizten Heizdorn zum Erhitzen der Bohrungswand des Fittings bzw. Formteils besteht. Danach werden Rohr und Fitting vom Werkzeug getrennt, und das Rohrende wird in die Bohrung des Fittings eingeschoben, so daß die beiden Teile miteinander verschweißen.

Das neue Mehrschicht-Kunststoffrohr kann zum Erstellen von Rohrleitungen für Flüssigkeiten, insbesondere Trinkwasserleitungen sowie von Gasleitungen verwendet werden und in der chemischen Industrie, im Apparatebau sowie der Lebensmittelindustrie zum Einsatz kommen.

## Patentansprüche

1. Extrudiertes, spritzgegossenes oder blasgeformtes Rohr, Fitting oder Formstück aus Kunststoff zum Erstellen von Rohrleitungen für flüssige, pastöse und gasförmige Medien, mit einem aus mindestens drei Schichten aufgebaute Rohrkörper mit einer Innenschicht (2) und einer Außenschicht (3) aus einem Grundwerkstoff und einer Mittelschicht (4) aus einem Grundwerkstoff sowie mindestens einem Zusatzwerkstoff,
**dadurch gekennzeichnet,**
**dass** die Innenschicht (2), die Mittelschicht (4) und die Außenschicht (3) des Rohres, Fittings oder Formstücks aus einem Polymerwerkstoff mit einem Polypropylen-Random-Copolymerisat als Grundwerkstoff bestehen, dass die Mittelschicht
a) Polypropylen-Random-Copolymerisat mit einem Gewichtsanteil von 50 bis 90 Gewichtsprozent, das einen Ethengehalt von 2 bis 6 Gewichtsprozent und einen MFR-Wert von 0,3 bis 10 g/10 min bei einer Prüftemperatur von 190°C und 5 kg Belastungsgewicht aufweist,
b) Glasfasern, Glaskugeln oder Glasmehl oder Mischungen dieser Werkstoffe mit einem Gewichtsanteil von 10 bis 50 Gewichtsprozent,
c) ein Kupplungsadditiv zum Verbund der Polypropylen-Random-Copolymerisat-Matrix mit den Glasfasern und/oder den Glaskugeln und/oder dem Glasmehl enthält,
**daß** in die amorphen Bereiche des teilkristallinen Polymerwerkstoffs der mit dem zu fördernden Medium in Kontakt stehenden Innenschicht (2) Additive gegen aggressive Medien, insbesondere oxidierende und reduzierende Medien, eingebaut sind und dass in die amorphen Bereiche des Polymerwerkstoffs der Mittelschicht (4) Füllstoffe und Additive als Barrierewerkstoff zur Minderung einer Migration der Additive aus der Innenschicht (2) in die Außenschicht (3) des Rohres, Fittings oder Formstücks eingearbeitet sind.

2. Kunststoffrohr nach Anspruch 1,
**dadurch gekennzeichnet,**
**daß** Innenschicht (2), Mittelschicht (4) und Außenschicht (3) aus dem gleichen Polymerwerkstoff als Grundwerkstoff bestehen.

3. Kunststoffrohr nach Anspruch 1 oder 2,
**dadurch gekennzeichnet,**
**daß** dem Verbundwerkstoff der Mittelschicht (4) und/oder dem Grundwerkstoff der Innenschicht (2) Verarbeitungshilfsstoffe wie Gleitmittel beigemischt sind.

4. Kunststoffrohr nach zumindest Anspruch 1,
**dadurch gekennzeichnet,**
**daß** der Grundwerkstoff der Außenschicht (3) Gleitmittel enthält.

5. Kunststoffrohr nach zumindest Anspruch 1,
**dadurch gekennzeichnet,**
**daß** der Verbundwerkstoff der Mittelschicht (4) und/oder der Grundwerkstoff der Innenschicht (2) Additive wie Licht- und Wärmestabilisatoren enthalten bzw. enthält.

6. Kunststoffrohr nach zumindest Anspruch 1,
**dadurch gekennzeichnet,**
**daß** in den Grundwerkstoff der Außenschicht (3) Additive wie Licht- und Wärmestabilisatoren eingearbeitet sind.

7. Kunststoffrohr nach Anspruch 1,
**dadurch gekennzeichnet,**
**dass** das Kupplungsadditiv des Verbundwerkstoffes der Mittelschicht (4) des Kunststoffrohres aus einer Silanverbindung besteht.

8. Kunststoffrohr nach Anspruch 1,
**dadurch gekennzeichnet,**
**dass** der Gewichtsanteil des Polypropylen-Random-Copolymerisats 60 bis 80 % beträgt.

9. Kunststoffrohr nach Anspruch 1,
**dadurch gekennzeichnet,**
**daß** der Gewichtsanteil der Glasfasern, Glaskugeln oder Glasmehl oder Mischungen dieser Werkstoffe 20 bis 40 Gewichtsprozent beträgt.

10. Verfahren zur Herstellung des Ausgangsverbundwerkstoffes der Mittelschicht des Kunststoffrohres nach zumindest Anspruch 1
**dadurch gekennzeichnet,**
**daß** in einer Compoundiereinheit ein plastifiziertes Polypropylen-Random-Copolymerisat mit Kurrschnittglasfasern mit einer Ausgangslänge von 0,3 bis 6 mm oder mit Endlosglasfasern, die beim Mischvorgang zerkleinert werden und/oder mit Glaskugeln und/oder mit Glasmeh, sowie gegebenenfalls Stabilisatoren und Additiven zu einem homogenen Verbundwerkstoff verarbeitet wird, wobei die Glasfasern einen tex zwischen 500 und 5000 aufweisen.

## Claims

1. Extruded, injection-molded or blow-molded pipe, fitting or shaped part of plastic for making pipelines for liquid, pasty and gaseous media, having a pipe element made up of at least three layers with an inner layer (2) and an outer layer (3) made of a basic material and a middle layer (4) made of a basic material and at least one additive material,
wherein
the inner layer (2), the middle layer (4) and the outer layer (3) of the pipe, fitting or shaped part comprise a polymer material with a polypropylene random copolymer as the basic material, wherein the middle layer contains
a) polypropylene random copolymer with a weight proportion of 50 to 90 % by weight, having an ethylene content of 2 to 6 % by weight and an MFR value of 0.3 to 10 g/10 mins. at a test temperature of 190°C and with 5 kg loading weight,
b) glass fibres, glass balls or glass powder or mixtures of these materials with a weight proportion of 10 to 50 % by weight,
c) a coupling additive for bonding of the polypropylene random copolymer matrix with the glass fibres and/or glass balls and/or glass powder,
wherein additives against aggressive media, in particular oxidizing and reducing media, are incorporated into the amorphous areas of the partially crystalline polymer material of the inner layer (2) in contact with the medium to be conveyed, and wherein fillers and additives are integrated into the amorphous areas of the polymer material of the middle layer (4) as a barrier material to reduce migration of the additives from the inner layer (2) to the outer layer (3) of the pipe, fitting or shaped part.

2. Plastic pipe according to Claim 1,
wherein
the inner layer (2), middle layer (4) and outer layer (3) are made from the same polymer material as the basic material.

3. Plastic pipe according to Claim 1 or Claim 2,
wherein
auxiliary processing agents such as lubricants are admixed with the composite material of the middle layer (4) and/or the basic material of the inner layer (2).

4. Plastic pipe according to at least Claim 1,
wherein
the basic material of the outer layer (3) contains lubricant.

5. Plastic pipe according to at least Claim 1,
wherein
the composite material of the middle layer (4) and/or the basic material of the inner layer (2) contain(s) additives such as light and heat stabilizers.

6. Plastic pipe according to at least Claim 1,
wherein
additives such as light and heat stabilizers are incorporated into the basic material of the outer layer (3).

7. Plastic pipe according to Claim 1,
wherein
the coupling additive of the composite material for the middle layer (4) of the plastic pipe comprises a silane compound.

8. Plastic pipe according to Claim 1,
wherein
the weight proportion of the polypropylene random copolymer is 60 to 80%.

9. Plastic pipe according to Claim 1,
wherein
the weight proportion of the glass fibres, glass balls or glass powder or mixtures thereof is 20 to 40 % by weight.

10. Process for manufacture of the initial composite material of the middle layer of the plastic pipe according to at least Claim 1,
wherein
a plastified polypropylene random copolymer with short-cut glass fibrers with an initial length of 0.3 to 6mm or with endless glass fibres crushed during the mixing process, and/or with glass balls and/or with glass powder, and if necessary stabilizers and additives, are transformed in a compounding unit into a homogeneous composite material, with the glass fibres having a tex between 500 and 5000.

## Revendications

1. Tuyau, raccord fileté ou raccord de tuyauterie extrudé, moulé par injection ou par soufflage, en matière plastique pour la construction de tuyauterie pour milieux liquides, pâteux et gazeux avec un corps de tube constitué d'au moins 3 couches, avec une couche intérieure (2) et une couche extérieure (3) constituées d'une matière de base et une couche centrale (4) constituée d'une matière de base ainsi que d'au moins une matière d'apport,
**caractérisé en ce que**
la couche intérieure (2), la couche centrale (4) et la couche extérieure (3) du tuyau, raccord fileté ou raccord de tuyauterie sont composées d'une matière polymère avec comme matière de base un polypropylène-random-copolymère, que la couche centrale contient
a) du polypropylène-random-copolymère d'un pourcentage en poids de 50 à 90 % qui présente une teneur en éthylène de 2 à 6 % en poids et un indice de fluidité (MFR) de 0,3 à 10 g/10 min par une température d'essai de 190 °C et un poids de charge de 5 kg,
b) des fibres de verre, des billes de verre ou du verre pulvérisé ou des mélanges de ces matières avec un pourcentage en poids de 10 à 50 %,
c) un additif copulateur pour l'alliage de la matrice de polypropylène-random-copolymère avec les fibres de verre et/ou les billes de verre et/ou le verre pulvérisé,
que des additifs contre les milieux agressifs, en particulier les milieux oxydants et réducteurs sont insérés dans les zones amorphes des matières polymères semi-cristallines de la couche intérieure (2) étant en contact avec les milieux à transporter et que des matières de remplissage et des additifs sont incorporés dans les zones amorphes de la matière polymère de la couche centrale (4) en tant que matière-barrière pour diminuer la migration des additifs de la couche intérieure (2) vers la couche extérieure (3) du tuyau, raccord fileté ou raccord de tuyauterie.

2. Tuyau en matière plastique selon la revendication 1,
**caractérisé en ce que**
la couche intérieure (2), la couche centrale (4) et le couche extérieure (3) ont comme matière de base la même matière polymère.

3. Tuyau en matière plastique selon la revendication 1 ou 2,
**caractérisé en ce que**
des matières auxiliaires telles que des agents lubrifiants sont mélangées à la matière composite de la couche centrale (4) et/ou à la matière de base de la couche intérieure (2).

4. Tuyau en matière plastique selon au moins la revendication 1,
**caractérisé en ce que**
la matière de base de la couche extérieure (3) contient des agents lubrifiants.

5. Tuyau en matière plastique selon au moins la revendication 1,
**caractérisé en ce que**
la matière composite de la couche centrale (4) et/ou la matière de base de la couche intérieure (2) contiennent / contient des additifs tels que des stabilisateurs optiques et thermiques.

6. Tuyau en matière plastique selon au moins la revendication 1,
**caractérisé en ce que**
des additifs tels que des stabilisateurs optiques et thermiques sont incorporés dans la matière de base de la couche extérieure (3).

7. Tuyau en matière plastique selon la revendication 1,
**caractérisé en ce que**
l'additif copulateur de la matière composite de la couche centrale (4) du tuyau en matière plastique est constitué d'un composé de silane.

8. Tuyau en matière plastique selon la revendication 1,
**caractérisé en ce que**
le pourcentage en poids du polypropylène-random-copolymère est de 60 à 80 %.

9. Tuyau en matière plastique selon la revendication 1,
**caractérisé en ce que**
le pourcentage en poids des fibres de verre, des billes de verre et du verre pulvérisé ou des mélanges de ces matières est de 20 à 40 %.

10. Procédé de fabrication de la matière composite de base de la couche centrale du tuyau en matière plastique selon au moins la revendication 1,
**caractérisé en ce que**
un polypropylène-random-copolymère plastifié est transformé dans une unité compoundée en une matière composite homogène avec des petits segments de fibres de verre d'une longueur de base de 0,3 à 6 mm ou avec des fibres de verre sans fin qui sont fractionnées lors du processus de mélange et/ou avec des billes de verre et/ou avec du verre pulvérisé, ainsi que, le cas échéant, des stabilisateurs et des additifs, sachant que les fibres de verre présentent un tex entre 500 et 5000.
